# EUROPEAN PATENT APPLICATION

(11) **EP 2 060 190 A1**
(43) Date of publication of application: **20.05.2009**
(21) Application number: 07120895.3
(22) Date of filing: 16.11.2007
(51) Int. Cl.: A23L 1/10, A23L 1/164, A23L 1/00, A23L 1/30

(54) **Cereal-based fortified products and process for their preparation**

(71) Applicant: Bühler AG, 9240 Uzwil (CH)
(72) Inventor: Spörndli, Ceacilia, 8005 Zürich (CH); Böhni, Peter, 6280 Hochdorf (CH)

(57) **Abstract**

A process for manufacturing a cereal-based fortified food product comprises the steps of (A) comminuting cereal raw material to obtain a comminuted cereal-based material; (B) hydrothermally-mechanically treating the comminuted cereal-based material until a cereal-based matrix material is obtained by at least partial gelatinization of the comminuted cereal-based material; (C) forming the at least partially gelatinized cereal-based matrix material by pressing and portioning in order to obtain cereal-based food articles; (D) drying the cereal-based food articles to obtain the final product in the form of reconstituted cereal-based food articles. At least one micronutrient is added to the comminuted cereal-based material during steps A) and/or B). Also, at least one further feature is added to the final product during any one of steps A) through D); said at least one further feature corresponding to the at least one micronutrient in the final product; and said at least one further feature being detectable by at least one of the consumer's senses.

## Description

The present invention relates to cereal-based fortified food articles and processes for their preparation.

A known process for manufacturing cereal-based fortified food articles comprises the steps of:
(A) comminuting cereal raw material to obtain a comminuted cereal-based material;
(B) hydrothermally-mechanically treating the comminuted cereal-based material until a cereal-based matrix material is obtained by at least partial gelatinization of the comminuted cereal-based material;
(C) forming the at least partially gelatinized cereal-based matrix material by pressing and portioning in order to obtain cereal-based food articles;
(D) drying the cereal-based food articles to obtain the final product;
wherein at least one micronutrient is added to the comminuted cereal-based material during steps A) and/or B).

An example of such known process is described in WO 2005/053433.

Cereal-based fortified products are used as a delivery system for micronutrients. In order to compensate for nutritional deficiencies typical for certain countries, specific micronutrients may be added to the "reconstituted" cereal-based food articles / food items which are then referred to as "fortified" cereal-based food articles / food items.

In addition to nutritional deficiencies typical for certain countries or climatic regions, there are nutritional deficiencies typical for certain obvious categories of consumers such as children, pregnant women, elderly persons, (hyper)active sportsmen, etc.

Also, there are less obvious nutritional deficiencies related to the genetic profile of an individual consumer or consumer group within a greater population.

It is an object of the present invention to provide cereal-based fortified food articles as a complementary part of an individual's nutrition or as an individualized / personalized food supplement.

This object is achieved by improving the above known cereal-based fortified food product such that at least one further feature is added to the final product during any one of steps A) through D); wherein said at least one further feature corresponds to the at least one micronutrient in the final product; and said at least one further feature is detectable by at least one of the consumer's senses.

This "marking", "tagging" or "labelling" of the cereal-based fortified food product according to the invention by some micronutrient-identifying macroscopic feature can be defined in a list relating individual micronutrients to the corresponding easily detectable macroscopic product feature. This "code" for individual micronutrients enables the consumer of this food product or a person providing the consumer with this food product to choose the food product with the micronutrient most needed by the consumer.

The cereal-based reconstituted fortified food product according to the present invention may be any imitation of a natural cereal grain such as corn, wheat, rice, etc or it may be any type of cereal-based snack product such as popcorn, puffed rice, corn flakes, etc.

Preferably, the at least one feature is selected from the group consisting of shape, colour, size, smell, taste and hardness of the cereal-based food articles. These features can be easily detected and memorized even by young children and the elderly.

Thus, an individual consumer whose primary need or need profile for a micronutrientenriched food supplement has been identified may avail himself with his personal mix of cereal-based fortified food products according to the present invention.

The at least one feature may be the shape of said cereal-based food articles.

The at least one feature may be the hardness of said cereal-based food articles.

Preferably, shape and hardness is provided during step C) of forming the at least partially gelatinized cereal-based matrix material by pressing and portioning in order to obtain cereal-based food articles; and/or during step D) of drying the cereal-based food articles to obtain the final product.

The at least one feature may be the size of said cereal-based food articles. Preferably, the size is provided during step C) of forming the at least partially gelatinized cereal-based matrix material by pressing and portioning in order to obtain cereal-based food articles.

The at least one feature may be the colour of said cereal-based food articles.

The at least one further feature may be the smell of said cereal-based food articles.

The at least one further feature may be the taste of said cereal-based food articles.

Preferably, colour, smell or taste is provided during any one of the following steps:
B) hydrothermally-mechanically treating the comminuted cereal-based material until a cereal-based matrix material is obtained by at least partial gelatinization of the comminuted cereal-based material; and/or
C) forming the at least partially gelatinized cereal-based matrix material by pressing and portioning in order to obtain cereal-based food articles; and/or
D) drying the cereal-based food articles to obtain the final product.

Any one of colour, smell and taste may be added in the form of solid particles, in the form of liquid droplets or in the form of solid particles or liquid droplets suspended in a carrier fluid. In particular, oil-soluble and/or water-soluble colorants, flavours and aromas may be added.

The at least one micronutrient is added to the comminuted cereal-based material during steps A) and or B). The micronutrient may be added in the form of solid particles, in the form of liquid droplets or in the form of solid particles or liquid droplets suspended in a carrier fluid. In particular, oil-soluble and/or water-soluble micronutrients such as vitamins and minerals may be added.

Preferably, the drying step (D) comprises a water removal phase (WR) where water is removed from the food articles; and a water homogenization phase (WH) where the water concentration within the food articles is homogenized. This prevents stress in the food articles. As a result, crack formation, shrinking and deformation are markedly reduced or even eliminated.

The idea of providing a water homogenization phase during the drying process, i.e. causing the moisture gradient in the rice-based food article to be flattened, results in similar material properties throughout most of the food article volume. In particular, most of the material volume or even all of it remains in the rubbery state throughout most of or during the entire drying process. Thus, stress build-up within the rice-based food articles during the drying process is reduced. As a result, rice-based food articles without any cracks or hardly any cracks and with neither any deformation nor any shrinkage can be obtained. Such water homogenization will also be referred to as "tempering" in this text.

Preferably, the drying step comprises a first water removal phase (WR1); a second water removal phase (WR2); and a water homogenization phase (WH1) between said first and second water removal phases (WR1 and WR2). The homogenization or tempering phase (WH1) not only causes a flattening of the water concentration gradient in the food article, but also reduces the difference between the initial and final water concentrations ("moisture gap") for each drying phase, i.e. each drying phase involves a much smaller moisture gap than a drying step (D) involving only one single uninterrupted drying phase. As a result, each water removal phase (WR1 and WR2) causes less material stress in the product during the overall drying step (D).

More preferably, the process comprises a first water homogenization phase (WH1) between said first and second water removal phases (WR1 and WR2); and a second water homogenization phase (WH2) after said second water removal phase (WR2). Again, this contributes to eliminating "dangerously dry" regions in the product prone to undergo transition from the rubbery to the glassy state which would cause crack formation, deformation or shrinkage of the food article. This is of particular relevance if the second water homogenization phase (WH2) is followed by a cooling phase where the product temperature is reduced and the product overall moisture remains fairly constant.

At least one emulsifier and/or hydrocolloid may be added to the comminuted cereal-based material during steps A) and or B). A hydrocolloid may also be added to the formed food article during the drying step D).

In a preferred embodiment, the cereal-based food articles have a shape similar to said natural cereal raw material used in step A). This allows broken cereal raw material to be upgraded and is especially preferred if a micronutrient is added to the comminuted cereal-based material during steps A) and or B). Such reconstituted cereal kernels may be provided with a high concentration of micronutrients (fortified cereal kernels) and may be mixed with normal (natural) cereal kernels to provide a mixture of natural and fortified cereal kernels.

The present invention also provides a fortified cereal-based food product manufactured by the process according to any one of the above paragraphs and comprising at least one feature corresponding to the at least one micronutrient in the product; and being detectable by at least one of the consumer's senses.

Preferably, the at least one feature is selected from the group consisting of shape, colour, size, smell, taste and hardness of the food product.

In particular, the fortified cereal-based food product may be a food product mix comprising a plurality of different types of fortified cereal-based food products according to the two preceding paragraphs. Using different sizes, colours or shapes for different micronutrient enriched food products, existing bulk material sorting, dosing or mixing equipment may be used for automatically preparing individual fortified food product mixtures with individual micronutrient mixing ratios.

The present invention will now be described in greater detail by referring to the following examples.

### Example 1: Reconstituted fortified rice kernels with colours

The reconstituted fortified rice kernels comprise a colorant, with red colour indicating vitamin A enriched rice kernels and yellow colour indicating vitamin B enriched rice kernels. The individually coloured rice kernels may be used for preparing an individual mix of reconstituted fortified rice kernels.

### Example 2a: Reconstituted fortified rice with letter shapes

The reconstituted fortified rice pieces are in the shape of letters or numbers, with letter A shape indicating vitamin A enriched rice pieces, letter B shape indicating vitamin B enriched rice pieces and letter D shape indicating vitamin D enriched rice pieces. The individually shaped rice pieces may be used for preparing an individual mix of reconstituted fortified rice pieces.

### Example 2b: Reconstituted fortified rice with schematic organ shapes

The reconstituted fortified rice pieces are in the shape of human organs, with an eye-shape indicating vitamin A enriched rice pieces, a heart-shape indicating omega-3-fatty acid enriched rice pieces and a bone-shape vitamin D enriched rice pieces. The individually shaped rice pieces may be used for preparing an individual mix of reconstituted fortified rice pieces.

### Example 3a: Popcorn with colours

The fortified popcorn pieces comprise a colorant, with red colour indicating vitamin A enriched popcorn pieces and yellow colour indicating vitamin B enriched popcorn pieces. The individually coloured popcorn pieces may be used for preparing an individual mix of fortified popcorn pieces.

### Example 3b: Popcorn with flavour

The fortified popcorn pieces comprise a flavour, with fish flavour indicating omega-3 fatty acid enriched popcorn pieces and orange flavour indicating vitamin C enriched popcorn pieces. The individually flavoured popcorn pieces may be used for preparing an individual mix of fortified popcorn pieces.

### Example 3c: Cornflakes with colours

The fortified corn flakes comprise a colorant, with red colour indicating vitamin A enriched corn flakes and yellow colour indicating vitamin B enriched corn flakes. The individually coloured corn flakes may be used for preparing an individual mix of fortified corn flakes.

### Example 4a: Reconstituted fortified wheat (spaghetti)

The fortified spaghetti comprise a colorant, with red colour indicating vitamin A enriched spaghetti and yellow colour indicating vitamin B enriched spaghetti. The individually coloured spaghetti may be used for preparing an individual mix of fortified spaghetti.

### Example 4b: Reconstituted fortified wheat

The reconstituted fortified wheat pieces are in the shape of human organs, with an eye-shape indicating vitamin A enriched wheat pieces, a heart-shape indicating omega-3-fatty acid enriched wheat pieces and a bone-shape indicating vitamin D enriched wheat pieces. The individually shaped wheat pieces may be used for preparing an individual mix of reconstituted fortified wheat pieces.

## Claims

1. A process for manufacturing a cereal-based fortified food product, comprising the steps of:
(A) comminuting cereal raw material to obtain a comminuted cereal-based material;
(B) hydrothermally-mechanically treating the comminuted cereal-based material until a cereal-based matrix material is obtained by at least partial gelatinization of the comminuted cereal-based material;
(C) forming the at least partially gelatinized cereal-based matrix material by pressing and portioning in order to obtain cereal-based food articles;
(D) drying the cereal-based food articles to obtain the final product in the form of reconstituted cereal-based food articles;
wherein at least one micronutrient is added to the comminuted cereal-based material during steps A) and/or B), **characterized in that**
➢ at least one further feature is added to the final product during any one of steps A) through D);
➢ said at least one further feature corresponds to the at least one micronutrient in the final product; and
➢ said at least one further feature is detectable by at least one of the consumer's senses.

2. A process according to claim 1, **characterized in that** the at least one further feature is selected from the group consisting of shape, colour, size, smell, taste and hardness of the cereal-based food articles.

3. A process according to claim 1 or 2, **characterized in that** the at least one further feature is the shape of said cereal-based food articles and that the shape is provided during step C) and/or D).

4. A process according to any one of claims 1-3, **characterized in that** the at least one further feature is the colour of said cereal-based food articles and that the colour is provided during any one of steps B) through D).

5. A process according to any one of claims 1-4, **characterized in that** the at least one further feature is the size of said cereal-based food articles and that the size is provided during step C).

6. A process according to any one of claims 1-5, **characterized in that** the at least one further feature is the smell of said cereal-based food articles and that the smell is provided during any one of steps B) through D).

7. A process according to any one of claims 1-6, **characterized in that** the at least one further feature is the taste of said cereal-based food articles and that the taste is provided during any one of steps B) through D).

8. A process according to any one of claims 1-7, **characterized in that** the at least one further feature is the hardness of said cereal-based food articles and that the hardness is provided during step C) or D).

9. A process according to any one of claims 1-8, **characterized in that** the drying step (D) comprises a water removal phase (WR) where water is removed from the food articles; and a water homogenization phase (WH) where the water concentration within the food articles is homogenized.

10. A process according to claim 9, **characterized in that** the process comprises a first water removal phase (WR1); a second water removal phase (WR2); and a water homogenization phase (WH1) between said first and second water removal phases (WR1 and WR2).

11. A process according to claim 10, **characterized in that** the process comprises a first water homogenization phase (WH1) between said first and second water removal phases (WR1 and WR2); and a second water homogenization phase (WH2) after said second water removal phase (WR2).

12. A process according to claim 4, **characterized in that** at least one emulsifier and/or hydrocolloid is added to the comminuted cereal-based material during steps A) and or B).

13. A process according to any one of claims 1-12, **characterized in that** the temperature of the cereal-based food articles in the drying step D) is maintained between 50 and 100°C.

14. A process according to any one of claims 1-14, **characterized in that** the water removal phase (WR) is carried out on a belt conveyor, in a fluidized bed or in a rotating drum.

15. A process according to any one of claims 1-14, **characterized in that** the water homogenization phase (WH) is carried out on a belt conveyor, in a fluidized bed or in a rotating drum.

16. A process according to any one of claims 1-15, **characterized in that** the initial water content of the cereal-based food articles prior to the drying step D) is 20-40 wt.-% and the final water content of the cereal-based food articles after the drying step D) is 10-16 wt.-%, based on the total weight of the cereal-based food articles.

17. A process according to any one of claims 1-16, **characterized in that** during said first water removal phase (WR1) the water content of the cereal-based food articles is reduced by 5-15 wt.-% and during said second water removal phase (WR2) the water content of the cereal-based food articles is reduced by another 5-15 wt.-%, based on the total weight of the cereal-based food articles.

18. A process according to any one of claims 1-17, **characterized in that** the cereal-based food articles have a shape similar to said natural cereal raw material used in step A).

19. A process according to any one of claims 1-18, **characterized in that** the hydrothermal-mechanical treatment of the comminuted cereal-based material in step B) is carried out by exposing the comminuted cereal-based material from step A) to a hot and damp medium in the presence of water and/or vapour, and mixing the comminuted cereal-based material while exposing it to shear.

20. A fortified cereal-based food product manufactured by the process according to any one of claims 1-19, **characterized in that** it comprises at least one feature corresponding to the at least one micronutrient in the product; and being detectable by at least one of the consumer's senses.

21. A food product according to claim 20, **characterized in that** the at least one feature is selected from the group consisting of shape, colour, size, smell, taste and hardness of the food product.

22. A food product mix comprising a plurality of different types of fortified cereal-based food products according to claims 20 or 21.
